Europäisches Patentamt

European Patent Office

Office européen des brevets

(11) Numéro de publication : **0 514 228 A1**

# (12) DEMANDE DE BREVET EUROPEEN

(21) Numéro de dépôt : **92400996.2**

(22) Date de dépôt : **09.04.92**

(51) Int. Cl.⁵ : **B23P 19/04**

(30) Priorité : **29.04.91 FR 9105235**

(43) Date de publication de la demande :
**19.11.92 Bulletin 92/47**

(84) Etats contractants désignés :
**AT BE CH DE DK ES GB IT LI NL SE**

(71) Demandeur : **FERCO INTERNATIONAL Usine de Ferrures de Bâtiment Société à responsabilité limitée**
**2, rue du Vieux-Moulin Reding**
**F-57400 Sarrebourg (FR)**

(72) Inventeur : **Kautt, Jean-Jacques**
**24 rue Pertois**
**F-67000 Strasbourg (FR)**

(74) Mandataire : **Rodhain, Claude et al**
**Cabinet Claude Rodhain 30, rue la Boétie**
**F-75008 Paris (FR)**

(54) **Tête de pose automatique d'un joint souple, en particulier pour la pose d'un joint d'étanchéité de vitrage dans une rainure de vantail.**

(57)    L'invention propose une tête de pose automatique du type comportant une platine (24) qui supporte un dispositif (46) de pose du joint (40) dans une rainure formée dans un chant plan d'un vantail de fenêtre et un organe de guidage (44) agencé à proximité du dispositif de pose (46) pour assurer le positionnement du joint dans la rainure.

Le vantail est maintenu en une même position fixe pendant toute la durée de l'opération de pose du joint, et la tête est montée sur un ensemble chariot-portique à mouvements croisés avec possibilité de rotation commandée autour d'un axe vertical, de manière à permettre la pose du joint sur toute la périphérie du vantail en une passe unique par rotation de la tête à chaque angle du vantail.

L'organe de guidage (44) est monté mobile sur la platine support (24) selon une direction de déplacement (X-X) perpendiculaire à la direction (F) d'avance du dispositif de pose le long de la rainure (28), entre une position active de guidage du joint et une position de repos dans laquelle l'organe de guidage (44) est éloigné du chant rainuré (30), cette dernière position étant prise à l'approche de l'angle du vantail.

FIG_1

La présente invention concerne une tête de pose automatique d'un joint souple, en particulier pour la pose d'un joint d'étanchéité de vitrage dans une rainure formée dans un chant plan d'un vantail de fenêtre.

Les ateliers classiques de montage de fenêtres, porte-fenêtres, portes ou autres vantaux sont généralement organisés en plusieurs postes dispersés, avec notamment différents postes de pose de joint correspondant chacun à un gabarit de vantail déterminé. Chacun de ces postes est alimenté à partir de stocks amont, hétéroclites, des divers vantaux, et chacun de ces postes est associé à des postes, également dispersés, de débit de joint et, éventuellement, de stockage intermédiaire de joints pré-débités à la longueur nécessaire.

L'invention se propose de réorganiser ces tâches d'approvisionnement de joint, d'approvisionnement de vantaux et de pose de joint en les regroupant sur une seule et même machine, qui puisse identifier chaque cadre d'ouvrant quelles que soient sa nature et ses dimensions, avec pour conséquence l'élimination des stocks intermédiaires, de la multiplication des stocks d'éléments intermédiaires préparés pour la pose en fonction des besoins et la suppression la dispersion des différents postes au sein d'un même atelier.

Grâce à l'invention, on aura en amont de la machine un flux continu, unique, d'approvisionnement constitué des divers vantaux, quel que soit leur type, qui seront traités sans rupture de charge par la machine qui débitera les joints en fonction des besoins et les posera automatiquement.

Il existe une machine d'un type connu, décrite dans le EP-A-0 387 124, permettant d'effectuer la pose automatique d'un joint extérieur dans une rainure de vantail de fenêtre, et notamment la pose d'un joint souple d'étanchéité sur la face interne de l'aile de recouvrement, perpendiculaire au chant externe de l'ouvrant.

La machine décrite dans ce document comporte une tête de pose dont la partie opérante est constituée par une platine qui supporte différents composants et notamment un dispositif de pose du joint dans la rainure et un organe de guidage du joint, réalisé par exemple sous la forme d'un tunnel de guidage et agencé à proximité du dispositif de pose, qui permet d'assurer le positionnement du joint dans la rainure lors de l'opération de pose.

La tête de pose de la machine décrite dans ce document peut être adaptée à d'autres opérations.

On constate toutefois qu'une difficulté se présente lorsque l'on désire effectuer la pose d'un joint d'étanchéité de vitrage dans une rainure formée dans un chant plan d'un vantail de fenêtre, lorsque la tête de pose arrive à proximité d'un angle intérieur du chant.

En effet, le dispositif de guidage du joint, qui est disposé en amont du dispositif de pose (si l'on considère le sens de progression de la tête de pose), constitue un obstacle à l'avance finale de la tête de pose ainsi qu'à sa rotation à 90° préalable à la pose d'un second tronçon de joint souple sur le montant consécutif, car le tunnel de guidage vient alors buter contre le montant perpendiculaire au sens de progression de la pose.

Du fait de l'impossibilité d'utiliser la machine décrite dans le EP-A-0 387 124 précité, la pose des joints de vitrage a jusqu'à présent été effectuée manuellement avec un outil de pose et de pressage du joint tel qu'une roulette de pose.

Le EP-A-0 110 156 propose une autre machine de pose de joint de vitrage, mais dans laquelle la tête de pose est essentiellement fixe, le dormant à équiper devant être déplacé et basculé de 90° pour passer d'un côté au suivant, ce qui ne permet pas une pose rationnelle du joint, en continu et en une seule passe.

Pour remédier aux inconvénients de ces machines précitées, l'invention propose une tête de pose du type divulgué par le EP-A-0 110 156 précité, c'est-à-dire comportant une platine qui supporte au moins un dispositif de pose du joint dans la rainure et un organe de guidage agencé à proximité du dispositif de pose pour assurer le positionnement du joint dans la rainure, caractérisée en ce que, le vantail étant maintenu en une même position fixe pendant toute la durée de l'opération de pose du joint, cette tête est montée sur un ensemble chariot-portique à mouvements croisés avec possibilité de rotation commandée autour d'un axe vertical, de manière à permettre la pose du joint sur toute la périphérie du vantail en une passe unique par rotation de la tête à chaque angle du vantail, et en ce que l'organe de guidage est monté mobile sur la platine support selon une direction de déplacement perpendiculaire à la direction d'avance du dispositif de pose le long de la rainure, entre une position active de guidage du joint et une position de repos dans laquelle l'organe de guidage est éloigné du chant rainuré, cette dernière position étant prise à l'approche de l'angle du vantail.

Selon d'autres caractéristiques avantageuses de l'invention :

- l'organe de guidage est monté mobile selon une direction sensiblement perpendiculaire au plan du chant rainuré;
- l'organe de guidage est un tunnel de guidage dont la section transversale intérieure est sensiblement complémentaire de celle du joint souple ;
- le tunnel de guidage comporte un fond de guidage qui fait face au chant rainuré et qui est monté mobile selon une direction transversale d'escamotage sensiblement parallèle au plan du chant rainuré et perpendiculaire à ladite direction d'avance, entre une position normale de guidage du joint et une position escamotée dans laquelle le tunnel de guidage présente une face ouverte

2

qui fait face au chant rainuré pour permettre l'échappement du joint hors du tunnel de guidage lorsque ce dernier est déplacé depuis sa position active de guidage en direction de sa position de repos ;

- le corps du tunnel de guidage est monté mobile par rapport à la platine selon ladite direction de déplacement et le fond du tunnel de guidage est monté mobile par rapport au corps du tunnel ;

- le tunnel de guidage présente une forme sensiblement parallélépipédique rectangle délimitée par un fond, une face supérieure parallèle au fond et deux joues latérales de guidage ;

- le tunnel de guidage est constitué de deux parties complémentaires en forme d'équerre, une première partie constituée de la face supérieure et d'une première joue latérale de guidage et une seconde partie constituée du fond du tunnel et de la seconde joue latérale de guidage ;

- la tête comporte au moins un vérin de commande des déplacements du tunnel de guidage du joint par rapport à la platine qui est par exemple agencée entre la platine support et la première partie constitutive du tunnel de guidage ;

- la tête de pose comporte au moins un vérin d'escamotage du fond du tunnel de guidage qui est par exemple agencé entre les première et seconde parties constitutives du tunnel de guidage.

L'invention propose également une machine de pose automatique d'un joint souple caractérisée en ce qu'elle est équipée d'une tête de pose conforme aux enseignements de l'invention.

◊

D'autres caractéristiques et avantages de l'invention apparaîtront à la lecture de la description détaillée qui va suivre, faite en référence aux dessins annexés sur lesquels:

- la figure 1 est une vue de face d'une tête de pose réalisée conformément aux enseignements de l'invention,

- la figure 2 est une vue latérale de gauche de la tête de pose illustrée sur la figure 1, sur laquelle on a illustré en coupe le vantail en cours d'équipement d'un de ces joints souples d'étanchéité ; et

- la figure 3 est une vue en coupe partielle selon la ligne 3-3 de la figure 1, qui illustre plus en détail la figure du tunnel de guidage du joint.

◊

La tête de pose selon l'invention qui est illustrée sur les figures est prévue pour être montée sur un ensemble chariot-portique à mouvements croisés avec possibilité de rotation commandée autour d'un axe vertical, du même type que le dispositif décrit dans le EP-A-0 387 124 précité, au contenu duquel on pourra se reporter pour en connaître la structure détaillée.

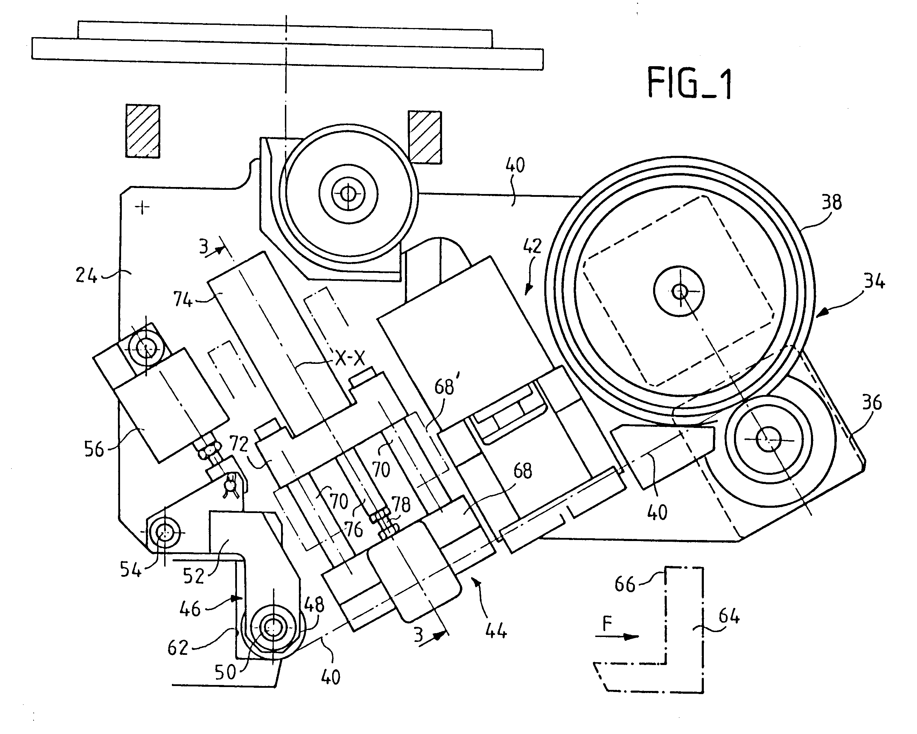

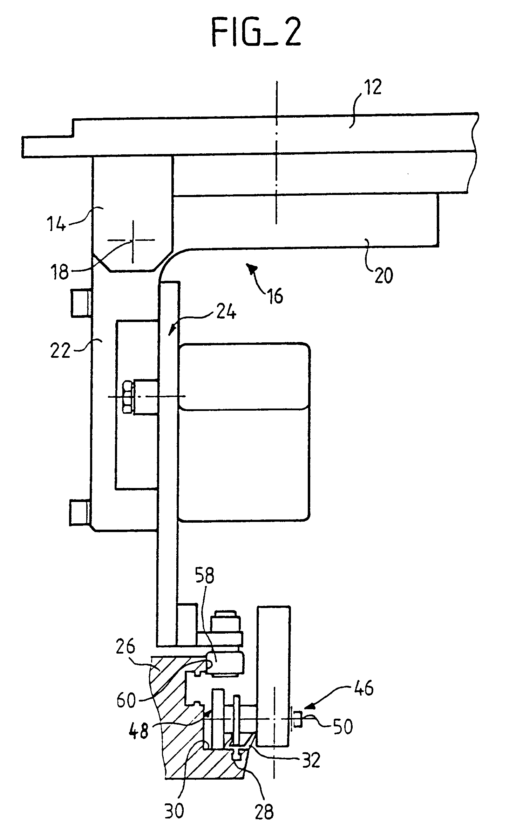

Comme on peut le voir sur les figures 1 et 2, la tête de pose est constituée pour l'essentiel par un ensemble support 10 qui est prévu pour être relié à l'ensemble chariot-portique précité par une plaque de fût horizontale 12 et supportant, par l'intermédiaire d'étriers 14, une potence 16 articulée autour d'un axe horizontal 18 comportant un bras horizontal 20 et un bras vertical 22.

Le bras 22 porte une platine verticale 24 sur laquelle sont montés les différents composants permettant de réaliser la pose automatique du joint.

La tête de pose permet d'équiper un vantail 26, tel que par exemple un vantail de fenêtre, afin d'y poser par enfoncement, selon une direction verticale (en considérant les figures), dans une rainure 28 préexistante formée dans un chant plan horizontal 30 un joint souple de vitrage tel que le joint 32 illustré figure 2.

Le vantail ou l'ouvrant qui doit être équipé à l'aide de la tête de pose est calé, mesuré et bridé par des mâchoires sur un plan d'appui et reste fixe pendant toute la pose du joint.

La platine 24 supporte un dispositif d'alimentation en continu 34 de la tête de pose, constitué d'un moteur 36 et d'une roue d'appui 38, qui permet de faire avancer en continu le joint souple dont le trajet est matérialisé par la ligne en trait mixte 40.

A sa sortie du dispositif 34, le joint passe à travers une unité de coupe ou cisaillage 42 puis dans un organe de guidage 44, pour atteindre enfin le dispositif de pose proprement dit 46.

Le dispositif de pose est, dans le mode illustré sur les figures, constitué pour l'essentiel par un galet de pose 48 qui est monté tournant autour d'un axe horizontal 50 au moyen d'une équerre 52 fixée sur la platine 24 autour d'un second axe horizontal 54.

Le dispositif de pose 46 est ainsi monté mobile en rotation autour de l'axe 54 et ses mouvements de pivotement sont commandés à l'aide d'un vérin 56.

Le dispositif de pose 46 comporte également un galet d'appui 58 monté tournant autour d'un axe vertical et qui prend appui contre une face 60 du chant latéral du vantail perpendiculaire à la face plane horizontale 30.

L'appui du galet 58 contre le chant 60 s'effectue par gravité du fait du poids de l'ensemble de la tête de pose qui provoque son pivotement automatique par gravité autour de l'axe 18.

La pose du joint se fait, d'une manière elle-même connue, par un mouvement d'avance continue et uniforme de la tête selon la direction indiquée par la flèche F de la figure 1, qui progresse au même rythme que le débit du joint, ce dernier venant s'insérer de lui-même dans la rainure de vantail dans laquelle il est pressé verticalement par le galet de pose 48.

La tête est illustrée à la figure 1 dans la position qu'elle occupe au départ de l'opération de pose du joint le long de l'un des montants du vantail dont on a illustré l'angle de départ, délimité par un montant latéral 62.

On a représenté à la droite de la figure 1, en traits mixtes, la silhouette du montant latéral 64 qui fait face au montant 62 et que la tête de pose va atteindre à la fin de l'opération de pose du joint.

On comprend aisément que, dans ces conditions, l'organe de guidage 44 percuterait la partie supérieure 66 du montant 64 avant la fin de l'opération de pose.

Afin de remédier à cet inconvénient, l'invention propose de monter l'organe de guidage 44 de manière mobile sur la platine 24.

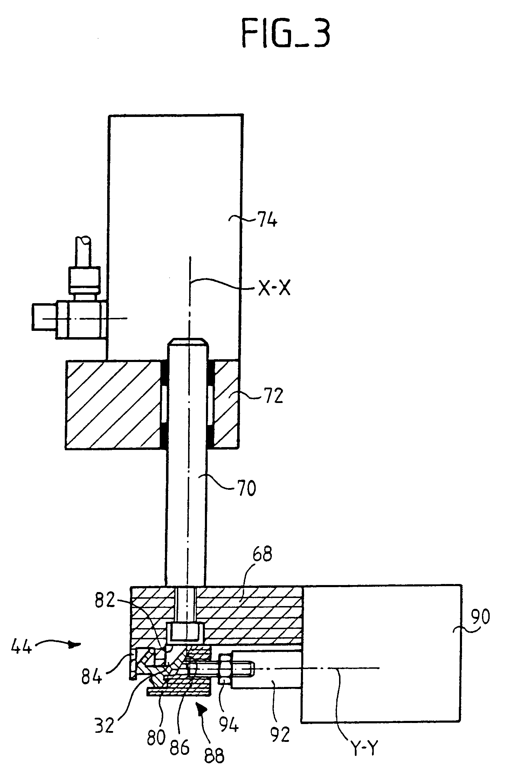

A cet effet, et comme on peut le voir aux figures 1 et 3, le corps 68 du dispositif de guidage 44 est monté mobile en coulissement par rapport à la platine 24.

Le guidage du corps 68 est assuré au moyen de deux broches de guidage 70 qui sont reçues en coulissement dans un bloc de guidage 72 fixé sur la platine 24.

Le corps 68 est illustré à la figure 1 dans sa position active de guidage. Il peut se déplacer sensiblement verticalement vers le haut selon la direction X-X sous l'action d'un vérin 74 qui commande ses déplacements.

Le corps du vérin 74 est fixé sur la platine 24 tandis que sa tige 76 est reliée, de manière réglable à l'aide d'un dispositif fileté 78, au corps 68 de l'organe de guidage 44.

L'organe de guidage 44 est réalisé sous la forme d'un tunnel de guidage dont la section intérieure est sensiblement complémentaire de la section du joint d'étanchéité 32.

La section interne du tunnel de guidage est globalement de forme rectangulaire et est délimitée par un fond 80, une face supérieure 82 parallèle au fond 80 et par deux joues latérales de guidage 84 et 86.

Ce contour rectangulaire est en fait adapté au profil exact de la section du joint, la joue latérale 86 étant, dans sa partie supérieure légèrement inclinée par rapport à la joue latérale 84.

Le tunnel de guidage 44 est réalisé en deux parties, la première partie supérieure en forme d'équerre ouverte vers le bas est venue de matière avec le corps 68 du tunnel de guidage 44 et est constitué par la joue latérale 84 gauche (en considérant la figure 3), et la face supérieure 82.

La seconde partie, indépendante de la première partie, est constituée par le fond 80 et par la joue latérale 86.

Cette seconde partie 88 est montée mobile par rapport au corps 68 selon une direction Y-Y qui est perpendiculaire à la direction X-X.

En effet, la seconde partie 88 doit pouvoir être escamotée transversalement préalablement au mouvement d'effacement du bloc 68 vers le haut (en considérant la figure 3), afin que le corps 68 n'entraîne pas le joint 32 dans son mouvement d'effacement.

A cet effet, il est prévu un vérin d'escamotage 90 dont le corps est fixé au corps 68 du tunnel de guidage 44 et dont la tige de vérin 92 est reliée, de manière réglable à l'aide d'un dispositif fileté 94, à la seconde partie 88 du tunnel de guidage 44.

Sous l'action du vérin 90, le fond 80 du tunnel de guidage peut donc être déplacé depuis sa position normale de guidage (illustrée à la figure 3) dans laquelle il ferme le tunnel de guidage, vers une position escamotée (non représentée) dans laquelle la face inférieure du tunnel de guidage est ouverte afin de permettre l'échappement du joint verticalement vers le bas (en considérant la figure 3).

La pose du joint souple d'étanchéité le long de l'un des montants du vantail, s'effectue de la manière suivante.

En partant de la position des composants illustrée aux figures 1 à 3, la tête de pose progresse régulièrement selon la flèche F et effectue automatiquement l'insertion du joint 32 dans la rainure 28.

Lorsque la tête de pose approche du montant latéral perpendiculaire 64, le dispositif de commande automatique de la tête de pose (non représenté) actionne le vérin d'escamotage 90 afin de provoquer l'escamotage du fond 80. Les moyens de commande provoquent ensuite l'actionnement du vérin 74 qui provoque le déplacement du corps 68 du tunnel de guidage 44 verticalement vers le haut selon la direction X-X jusqu'à ce qu'il vienne occuper sa position 68' représentée en traits mixtes à la figure 1, dans laquelle l'ensemble du tunnel de guidage est éloigné de la surface plane horizontale 30 et de la partie supérieure 66 du montant 64.

Le tunnel de guidage 44 ne s'oppose donc plus à la progression finale de la tête de pose en direction du montant 64. Les moyens de commande provoquent ensuite le cisaillage du joint à l'aide de l'unité 42 qui précède la fin de la course d'avance du galet de pose 48 le long du chant 30.

On a pu ainsi réaliser la pose automatique du joint souple sur toute la longueur du montant, et ceci de manière automatique.

Les moyens de commande de la tête de pose et de la machine qui en est équipée, peuvent ensuite provoquer la rotation de la tête à 90° autour de son axe vertical de manière à entamer la pose d'un second tronçon de joint le long du montant 64.

Préalablement au début de cette opération de pose consécutive, les moyens de commande auront provoqué successivement la descente du tunnel de guidage 68 vers sa position active de guidage illustrée à la figure 1 puis la fermeture du fond 80, sous l'action du vérin d'escamotage 90 afin que le tunnel de guidage 44 puisse assurer normalement le guidage du joint en direction du galet de pose 48.

Le joint ayant été coupé avant que le galet de pose n'effectue sa course résiduelle, ces opérations préalables se font en l'absence de joint dans le tunnel de guidage, ce qui est souhaitable. En effet, s'il y avait eu approvisionnement de joint, ce dernier se trouverait libre et non guidé et, du fait de sa souplesse, se positionnerait mal ou entraverait la fermeture de la partie 88 de la pièce 44 et, de ce fait, ne se mettrait pas correctement en place sous le galet de pose 46 ; en outre, à supposer même que le joint se trouve tendu entre le galet de pose et le dispositif d'approvisionnement, il subsisterait un risque de coincement lors de la fermeture de la pièce 88.

Le joint est alors déroulé d'une longueur prédéterminée telle que, dès l'introduction dans la gorge du vantail, son extrémité vienne en contact exactement à l'endroit du sommet de l'angle du vantail. La libération du galet de pose applique ensuite au joint, par gravité, une sollicitation horizontale et l'approvisionnement du joint, une composante horizontale ; par la force résultante, le joint se place ainsi exactement dans l'angle du vantail avec son extrémité dans la rainure, le processus se poursuivant alors de la manière décrite plus haut depuis ce point de départ.

Dans le mode de réalisation illustré à la figure 1, la direction X-X est légèrement inclinée par rapport à la perpendiculaire au plan de la surface horizontale 30, l'invention n'étant pas limitée à cet agencement particulier mais pouvant également s'appliquer à tout organe de guidage du type du tunnel 44 agencé à proximité du dispositif de guidage 46 et qu'il serait nécessaire d'effacer afin d'éviter sa venue en contact avec un obstacle le long du parcours de pose.

L'invention a été décrite pour la pose d'un joint de vitrage mais n'est pas limitée à cette application et peut notamment être utilisée pour la pose de différents joints d'étanchéité.

De même l'invention n'est pas limitée au mode de réalisation en deux parties en forme d'équerre du tunnel 44, une variante pouvant notamment consister à n'escamoter que le fond 80 en conservant deux joues latérales de guidage fixes par rapport au corps 68.

La tête de pose selon l'invention peut être employée notamment pour l'équipement de vantaux ou de fenêtres en bois, en PVC (polychlorure de vinyle) en aluminium, etc.

## Revendications

1) Tête de pose automatique d'un joint souple (32), en particulier pour la pose d'un joint d'étanchéité de vitrage dans une rainure (28) formée dans un chant plan (30) d'un vantail (26) de fenêtre, du type comportant une platine (24) qui supporte au moins un dispositif (46) de pose du joint (32) dans la rainure (28) et un organe de guidage (44) agencé à proximité du dispositif de pose (46) pour assurer le positionnement du joint dans la rainure,

caractérisée en ce que, le vantail étant maintenu en une même position fixe pendant toute la durée de l'opération de pose du joint, cette tête est montée sur un ensemble chariot-portique à mouvements croisés avec possibilité de rotation commandée autour d'un axe vertical, de manière à permettre la pose du joint sur toute la périphérie du vantail en une passe unique par rotation de la tête à chaque angle du vantail, et en ce que l'organe de guidage (44) est monté mobile sur la platine support (24) selon une direction de déplacement (X-X) perpendiculaire à la direction (F) d'avance du dispositif de pose le long de la rainure (28), entre une position active de guidage du joint et une position de repos dans laquelle l'organe de guidage (44) est éloigné du chant rainuré (30), cette dernière position étant prise à l'approche de l'angle du vantail.

2) Tête selon la revendication 1, caractérisée en ce que l'organe de guidage (44) est monté mobile selon une direction (X-X) sensiblement perpendiculaire au plan du chant rainuré (30).

3) Tête de pose selon l'une des revendications 1 ou 2, caractérisée en ce que l'organe de guidage (44) est un tunnel de guidage dont la section transversale intérieure est sensiblement complémentaire de celle du joint souple (32).

4) Tête de pose selon la revendication 3, caractérisée en ce que le tunnel de guidage comporte un fond de guidage (80) qui fait face au chant rainuré (30) et qui est monté mobile selon une direction transversale d'escamotage (Y-Y) sensiblement parallèle au plan du chant rainuré (30) et perpendiculaire à ladite direction d'avance (F), entre une position normale de guidage du joint (32) et une position escamotée dans laquelle le tunnel de guidage présente une face ouverte qui fait face au chant rainuré (30) pour permettre l'échappement du joint (32) hors du tunnel de guidage (44) lorsque ce dernier est déplacé depuis sa position active de guidage en direction de sa position de repos.

5) Tête de pose selon la revendication 4, caractérisée en ce que le corps (68) du tunnel de guidage (44) est monté mobile par rapport à la platine (24) selon ladite direction de déplacement (X-X), et en ce que le fond (80) du tunnel de guidage est monté mobile par rapport au corps du tunnel (68).

6) Tête de pose selon la revendication 5, caractérisée en ce que le tunnel de guidage présente une forme sensiblement parallélépipédique rectangle délimitée par un fond (80), une face supérieure (82) parallèle aux joues latérales de guidage (84, 86).

7) Tête de pose selon la revendication 6, caractérisée en ce que le tunnel de guidage est constitué de deux parties complémentaires en forme d'équerre, une première partie constituée de la face supérieure (82) et d'une première joue latérale de guidage (84) et une seconde partie (88) constituée du fond (80) du tunnel de guidage et de la seconde joue latérale de guidage (86).

**8)** Tête de pose selon l'une quelconque des revendications 4 à 7, caractérisée en ce qu'elle comporte au moins un vérin (74) de commande des déplacements du tunnel de guidage du joint par rapport à la platine (24).

**9)** Tête de pose selon la revendication 8 prise en combinaison avec la revendication 7, caractérisée en ce que le vérin de commande (74) est agencé entre la platine support (24) et ladite première partie constitutive du tunnel de guidage.

**10)** Tête de pose selon l'une quelconque des revendications 4 à 9, caractérisée en ce qu'elle comporte au moins un vérin (90) d'escamotage du fond (80) du tunnel de guidage (44).

**11)** Tête de pose selon la revendication 10 prise en combinaison avec la revendication 9, caractérisée en ce que le vérin d'escamotage (90) du fond (80) du tunnel de guidage (44) est agencé entre lesdites première et seconde parties constitutives du tunnel de guidage.

**12)** Machine de pose automatique d'un joint souple, en particulier de pose d'un joint d'étanchéité de vitrage dans une rainure de vantail de fenêtre, cette machine comprenant:

   - des moyens d'amenage du vantail,
   - des moyens de reconnaissance du type de vantail et de mesure des dimensions de celui-ci,
   - des moyens de bridage du vantail,
   - des moyens de dévidage de joint,
   - un ensemble chariot-portique à mouvements croisés,
   - montée sur cet ensemble, une tête de pose automatique de joint selon l'une des revendications précédentes, et
   - des moyens commandés d'entraînement en rotation, autour d'un axe vertical, de cette tête par rapport à l'ensemble chariot-portique.

FIG_1

# FIG_2

# FIG_3

Office européen
des brevets

**RAPPORT DE RECHERCHE EUROPEENNE**

Numero de la demande

EP 92 40 0996

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | EP-A-0 110 156 (P R E H  INDUSTRIEAUSRüSTUNGEN) <br> * page 9, ligne 28 - page 10, ligne 5 * <br> --- | 1-3,12 | B23P19/04 |
| A | EP-A-0 398 769 (FERCO) <br> * colonne 6, ligne 46 - colonne 7, ligne 5 * <br> --- | 1,12 | |
| A,D | EP-A-0 387 124 (FERCO) <br> * le document en entier * <br> ----- | 1,12 | |

**DOMAINES TECHNIQUES RECHERCHES (Int. Cl.5 )**

B23P
B25B
E04F
B62D

Le présent rapport a été établi pour toutes les revendications

| Lieu de la recherche | Date d'achèvement de la recherche | Examinateur |
|---|---|---|
| LA HAYE | 12 AOUT 1992 | RIS M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)